# EUROPÄISCHE PATENTSCHRIFT

(11) **EP 0 591 722 B1**
(45) Veröffentlichungstag und Bekanntmachung des Hinweises auf die Patenterteilung: **08.01.1997**
(21) Anmeldenummer: 93114794.6
(22) Anmeldetag: 15.09.1993
(51) Int. Cl.: B62D 21/02, B60R 19/02, B62D 65/00

(54) **Nutzfahrzeug, insbesondere Frontlenker-Lastkraftwagen**
Industrial vehicle, especially lorry with forward-mounted cab
Véhicule utilitaire, en particulier camion avec cabine à l'avant

(30) Priorität: 09.10.1992 DE 4234126
(43) Veröffentlichungstag der Anmeldung: 13.04.1994
(73) Patentinhaber: MAN Nutzfahrzeuge Aktiengesellschaft, 80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- DE-A- 2 714 017
- DE-A- 2 714 017
- DE-A- 3 312 446
- DE-A- 4 112 372
- FR-A- 659 850
- FR-A- 659 850
- FR-A- 2 214 281
- FR-A- 2 214 281
- FR-A- 2 667 839
- US-A- 1 894 602

## Beschreibung

Die Erfindung betrifft einen Lastkraftwagen, insbesondere der Frontlenker-Bauart, zur Bildung eines Nutzfahrzeuges mit Merkmalen der im Oberbegriff des Anspruchs 1 angegebenen Art.

Die Erfindung geht aus von Lastkraftwagen herkömmlicher Bauart, also Frontlenker- oder Hauber-Lastkraftwagen, die mit ihrem Fahrgestell einschließlich Fahrerhaus und unter bzw. vor diesem ungeordneten Antriebsaggregat die Basis für ein Nutzfahrzeug bilden. Solche Frontlenker- oder Hauber-Lastkraftwagen weisen ein Fahrgestell auf, dessen Rahmen aus zwei mit ihrer Oberkante in einer horizontalen Ebene liegenden Längsträgern besteht, die über mehrere Querträger verbunden sind. Dabei haben die Rahmen-Längsträger eine Querschnitts-Höhe, die je nach zulässigem Gesamtgewicht des Nutzfahrzeuges bis zu 400 mm betragen kann. Bedingt dadurch ist für die Herstellung dieser Rahmen-Längsträger relativ viel Material notwendig. Außerdem tragen diese in der Regel aus einteiligen Blechpreßteilen bestehenden Rahmen-Längsträger in ganz erheblichem Maße zum Leergewicht des Nutzfahrzeuges bei. Aufgrund der Festigkeit des Materiales, des Querschnittes der Rahmen-Längsträger und der diese verbindenden Querträger ergibt sich eine bestimmte Biegesteifigkeit des Rahmens. Eine erforderliche Rahmen-Biegesteifigkeit kann daher nur durch eine entsprechende Auslegung dieser Komponenten erzielt werden.

Es ist daher Aufgabe der Erfindung, bei einem Lastkraftwagen der gattungsgemäßen Art dessen Rahmen dahingehend abzuändern, daß die erforderliche Biegesteifigkeit desselben mit geringerem Gewicht und Materialeinsatz realisierbar ist.

Diese Aufgabe ist erfindungsgemäß bei einem Lastkraftwagen der gattungsgemäßen Art durch die im Kennzeichen des Anspruchs 1 angegebene Rahmen-Konstruktion gelöst.

Vorteilhafte Ausgestaltungen dieser Lösung sind in den Unteransprüchen angegeben.

Bedingt durch die erfindungsgemäße Auflösung jedes der beiden Rahmen-Längsträger in ein oberes und ein unteres Längsträger-Teil ist somit in Verbindung mit den jeweiligen Querträgern ein Rahmenmittelabschnitt darstellbar, mit dem Ergebnis einer sehr hohen Biegesteifigkeit bei gleichzeitig geringerem Gewicht und geringerem Materialeinsatz als bei bekannten Rahmen-Konstruktionen. Die erfindungsgemäße Längsträgeraufteilung kommt mithin nur in jenem Bereich des Nutzfahrzeuges zur Anwendung, der naturgemäß wegen der An- und Aufbauten und Beladung am stärksten belastet ist. Rahmenbereiche hinter der/den Hinterachse(n) und vor dem Auflösungsbereich unter dem Fahrerhaus erfordern regelmäßig keine solch hohe Biegesteifigkeit und können daher ebenfalls entsprechend leichter, mit weniger Materialeinsatz und konstruktiv günstiger gestaltet werden.

Aus der FR-A-22 14 281 ist eine Fahrgestellkonstruktion bekannt, die bei einem Anhänger oder Sattelauflieger anwendbar ist, jedoch nicht die Basis eines Lastkraftwagen bilden kann. Das dortige Fahrgestellkonzept sieht eine obere Plattform vor, die nicht längs, sondern quergeteilt ist, welche drei von vorn nach hinten durchgehende Platten teils außen, teils zwischen zwei Längsträgern angeschlossen eine Ebene für den Anschluß von Aufbauten bilden. Eine zweite Plattform ist unterhalb der oberen vorgesehen, die zur Ablage von Fahrzeugteilen wie Ersatzrädern und dergleichen dient. Eine Lehre in Richtung der Erfindung geht von dieser bekannten Fahrgestellkonstruktion jedoch nicht aus.

Ferner ist aus der DE-A-33 12 446 ein ebenfalls gattungsfremder Lastkraftwagen bekannt, nämlich ein solcher der Unterflurbauart, bei dem das Antrielssaggregat hinter dem Fahrerhaus in einem dort speziell für dessen stehenden Einbau ausgebildeten Fahrgestell-Rahmen angeordnet ist. Zu diesem Zweck ist auf dem normalen Rahmen ein Hilfsrahmen aufgesetzt, der wiederum im Bereich für die Befestigung des Antriebsaggregates speziell ausgebildet ist und auch das tragende Organ für die Aufbauten dieses Lastkraftwagen bildet.

Ferner sei der Vollständigkeit wegen auch auf einen aus der DE-A-27 14 017 bekannten Fahrgestellrahmen eingegangen. Dieser ist ausschließlich einem Omnibus mit Heckmotoranordnung zuzuordnen. Dabei sind unterhalb der Rahmen-Längsträger zwischen Vorder- und Hinterachse weitere Längsträger angeordnet, die aber lediglich den Rahmen für einen Buskofferraum innerhalb der Bodengruppe bilden. Auf einen Lastkraftwagen der gattungsgemäßen Art ist eine solche Omnibus-Bodengruppe jedoch nicht zu lesen und auch nicht in naheliegender Weise übertragbar.

Nachstehend ist die erfindungsgemäße Lösung anhand mehrerer in der Zeichnung dargestellter Ausführungsbeispiele noch näher erläutert. In der Zeichnung zeigen:
- Fig. 1, 2, 3, 5, 6, 8: jeweils in schematisierter Seitenansicht ein Lastkraftwagen der Frontlenker-Bauart (ohne Auf- und Anbauten) mit einer Ausführungsform der erfindungsgemäßen Rahmen-Konstruktion,
- Fig. 4: einen schematisierten Querschnitt durch die Ausführungsform gemäß Fig. 2 und 3,
- Fig. 7: eine Draufsicht auf eine Ausführungsform für den Heckbereich des Fahrzeuges gemäß Fig. 3, 5, 6, 8,
- Fig. 9: eine Variante der Ausführungsform gemäß Fig. 8 schematisiert (nur Heckbereich),
- Fig. 10 bis 13: je eine Ausführungsform der Querträger-Verbindungen zwischen den beiden erfindungsgemäß in zwei Teile aufgelösten Längsträger-Abschnitten,
- Fig. 14 bis 16: je eine Ausführungsform für den Anschluß von Organen für einen seitlichen Unterfahrschutz an den erfindungsgemäß aufgelösten Längsträger-Abschnitten.

In den Figuren sind gleiche bzw. einander entsprechende Bauteile mit gleichen Bezugszeichen angezogen.

Bei dem Lastkraftwagen kann es sich um einen Lastkraftwagen jeglicher Bau- und Einsatzart handeln. Die Basis bildet somit ein Lastkraftwagen der Frontlenker- oder Hauber-Bauart, auf dessen Fahrgestell je nach Einsatzzweck die entsprechenden Auf- und/oder Anbauten angebracht sind.

Der Lastkraftwagen weist ein Fahrgestell auf, dessen Rahmen 1 aus zwei bauartgleichen, über Querträger miteinander verbundenen Längsträgern 2, 3 besteht. Vom Rahmen 1 werden in dessen vorderem Bereich ein Antriebsaggregat 4 - eingebaut zwischen beiden Längsträgern 2, 3 - und ein Fahrerhaus 5 - letzteres über Lagerböcke 6, 7 - getragen.

Dem erfindungsgemäßen Rahmen-Konzept entsprechend ist jeder der beiden Rahmen-Längsträger 2, 3 etwa ab der Fahrerhaus-Rückwand 8 in ein oberes Längsträger-Teil 2/1, 3/1 und ein unteres Längsträger-Teil 2/2, 3/2 aufgelöst, die vor der (ersten, vorderen) Hinterachse 12 wieder miteinander verbunden sind.

Nachfolgend sind die verschiedenen Ausführungsmöglichkeiten dieses erfindungsgemäßen Rahmen-Konzeptes anhand der einzelnen Figuren näher erläutert.

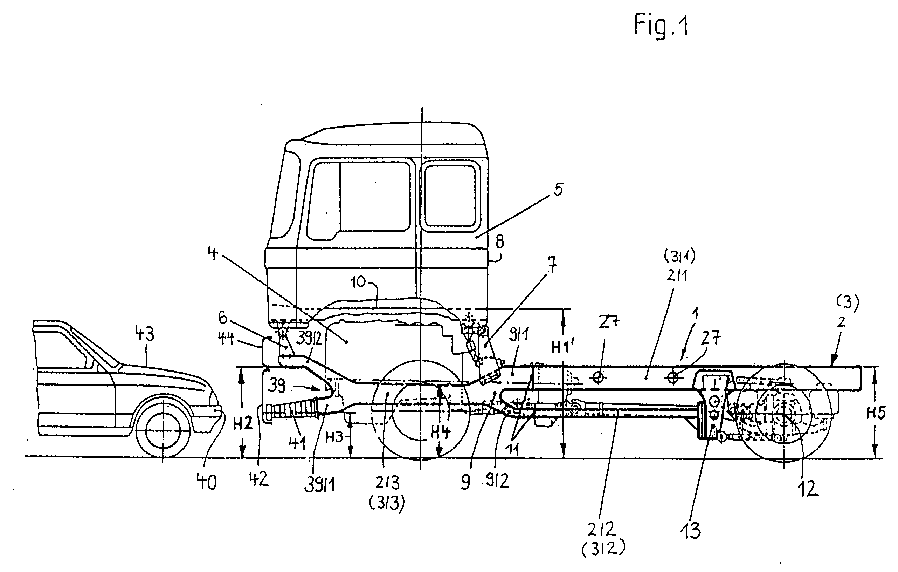

Bei den Ausführungsformen gemäß Fig. 1, 2, 3, 5 und 6 weist jeder der beiden Rahmen-Längsträger 2, 3 am hinteren Ende eines vorderen Träger-Abschnittes 2/3 bzw. 3/3 eine Vertikal-Gabelung 9 mit oberem Gabel-Teil 9/1, an dem sich das obere Längsträger-Teil 2/1 bzw. 3/1 anschließt, und unterem Gabel-Teil 9/2, an dem sich das untere Längsträger-Teil 2/2 bzw. 3/2 anschließt, auf. Der vordere Längsträger-Abschnitt 2/3 bzw. 3/3 jedes Längsträgers 2, 3 ist dabei um ein gewisses Maß zumindest partiell abgesenkt, um eine Tieferlegung des Antriebsaggregates 4 und gegebenenfalls auch des Fahrerhauses 5 zu ermöglichen. Zum Vergleich: Das Maß des Abstandes zwischen Fahrbahn und Oberkante oberes Längsträger-Teil 2/1 bzw. 3/1 ist in der Zeichnung mit H5 angegeben. Demgegenüber ist das Maß zwischen Fahrbahn und Oberkante des abgesenkten vorderen Träger-Abschnittes 2/3 bzw. 3/3, welches in der Zeichnung mit H4 angegeben ist, kleiner und beträgt etwa 0,6 - 0,9 H5. Das Maß zwischen Fahrbahn und Boden 10 des tiefer gelegten Fahrerhauses 5 ist in der Zeichnung mit H1' angegeben. Im übrigen können die vorderen abgesenkten Längsträger-Abschnitte 2/3, 3/3 zur Bildung eines etwa V-förmigen Einbaubereiches für das Antriebsaggregat auch in sich von der Vertikalen abweichend schräg gestellt sowie zum direkten Anschluß von Achs- bzw. Einzelradaufhängungsorganen mit entsprechenden Aus- und Einbuchtungen versehen sein.

Die beiden Teile 2/1, 2/2 bzw. 3/1, 3/2 jedes Rahmen-Längsträgers 2, 3 sind in den Ausführungsbeispielen gemäß Fig. 1, 2, 3, 5 und 6 mit größerem Abstand übereinander und in Längsrichtung im wesentlichen parallel verlaufend angeordnet. Außerdem ist dabei jedes der beiden Teile 2/1, 2/2 bzw. 3/1, 3/2 eines Rahmen-Längsträgers 2, 3 mit dem zugehörigen Gabel-Teil 9/1 bzw. 9/2 über Schraub- oder Nietverbindungen verbunden. Die jeweiligen Schnitt- bzw. Anschlußstellen sind in der Zeichnung mit 11 angezogen. Dies hat den Vorteil, daß das Fahrzeug in zwei Modulen vormontierbar ist, nämlich einem ersten Modul, bestehend aus Fahrgestell-Vorderteil, Antriebsaggregat 4 und Fahrerhaus 5, sowie einem zweiten Modul, bestehend aus Fahrgestell-Hinterteil mit Hinterachse(n) 12 und den üblichen, in diesem Fahrzeugbereich angeordneten Komponenten bzw. Aggregaten.

Die beiden Teile 2/1, 2/2 bzw. 3/1, 3/2 jedes Rahmen-Längsträgers 2, 3 können am zugehörigen Gabel-Teil 9/1 bzw. 9/2 jedoch auch angeschweißtsein.

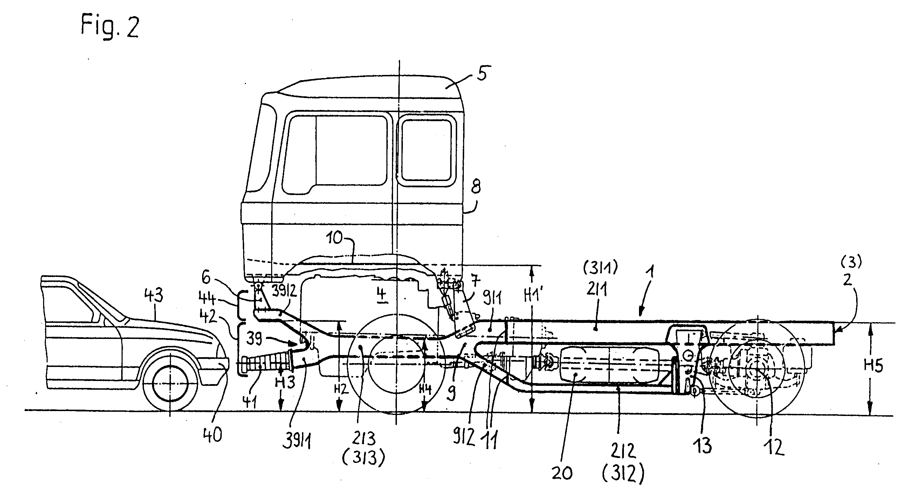

Das obere Teil 2/1, 3/1 jedes Rahmen-Längsträgers 2, 3 kann sich, wie bei den Ausführungsbeispielen gemäß Fig. 1 und 2, über die Hinterachsanordnung hinaus erstrecken. Das untere Längsträger-Teil 2/2, 3/2 endet dagegen jeweils vor der (ersten, vorderen) Hinterachse 12 und ist dort über einen Lagerschild 13, an dem Hinterachsaufhängungsorgane angelenkt sind, mit dem zugehörigen oberen Längsträger-Teil 2/1, 3/1 verbunden.

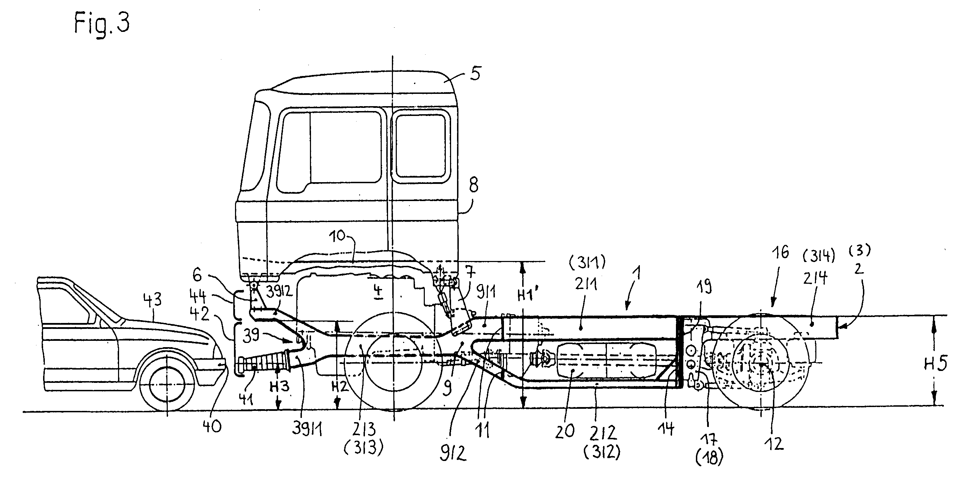

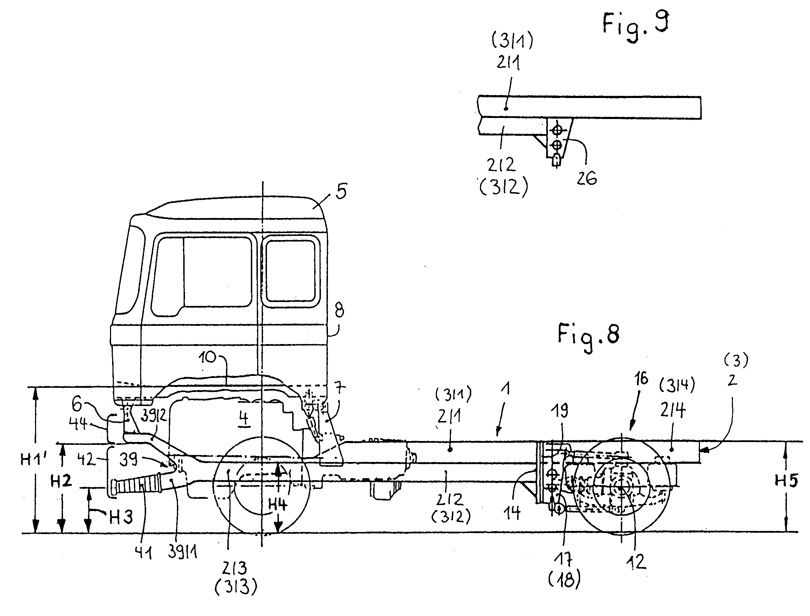

Alternativ hierzu können jedoch beide Teile 2/1, 2/2 bzw. 3/1, 3/2 jedes Rahmen-Längsträgers 2, 3 nach hinten auch nur bis vor die (erste, vordere) Hinterachse 12 reichen (siehe die Ausführungsbeispiele gemäß Fig. 3, 5, 6 und 7) und dort beispielsweise über eine Vertikal-Traverse 14 miteinander verbunden sein. In diesem Fall (siehe insbesondere Fig. 7) ist der Rahmen nach hinten durch sich an den oberen Längsträger-Teilen 2/1, 3/1 in deren Höhe anschließende, durch wenigstens einen Querträger 15 verbundene Längsträger-Teile 2/4 bzw. 3/4 ergänzt. Diese Ausführungsvariante macht es möglich, daß das Fahrgestell-Heck 16 als Modul, bestehend aus Rahmen-Endstück 2/4, 3/4, 15, Hinterachse(n) 12 und weiteren Anbauten, vormontierbar und dann am davor gegebenen Fahrgestellabschnitt befestigbar ist. Für die Anlenkung von Hinterachsaufhängungsorganen sind dabei außen an den Längsträger-Teilen 2/4, 3/4 jeweils seitliche Lagerschilde 17, 18 vorgesehen. Frontseitig der letzteren und verbunden mit diesen ist beispielsweise eine Anschlußplatte 19 gegeben, die bei der Montage des vormontierten Fahrgestell-Hecks 16 an der Vertikaltraverse oder endseitig der Längsträger-Teile 2/1, 2/2, 3/1, 3/2 gegebenen Anschlußflanschen 14 zur Anlage kommt und dort befestigt wird.

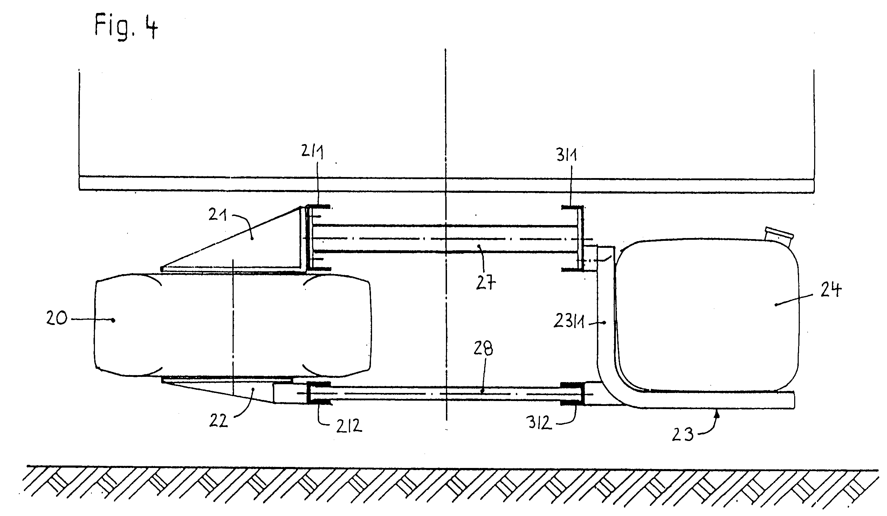

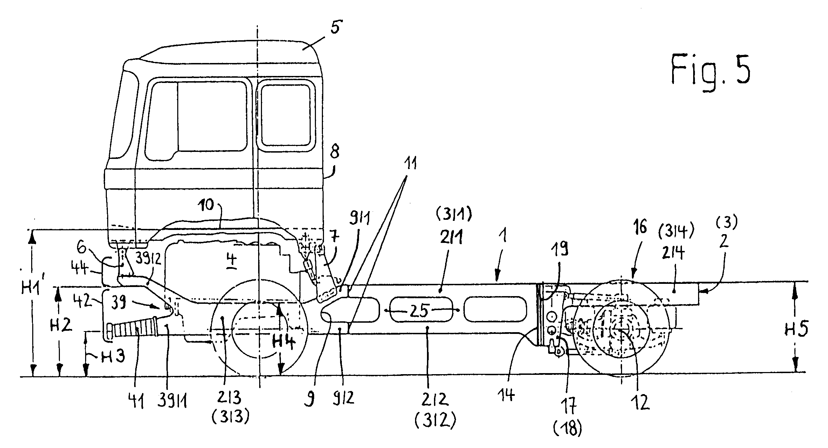

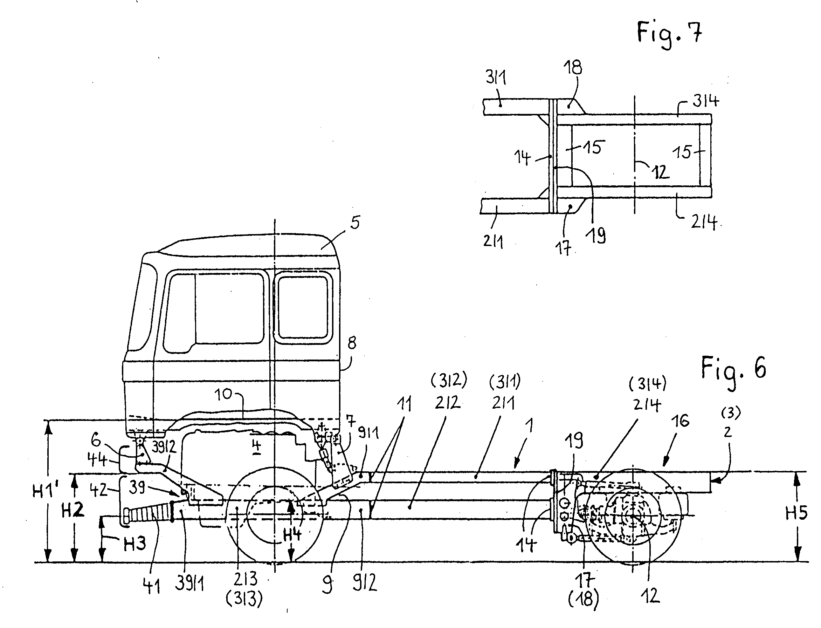

Bei den aus Fig. 2 bis 4 ersichtlichen Ausführungsbeispielen ist das untere Teil 2/2 bzw. 3/2 eines der Rahmen-Längsträger 2, 3 soweit nach unten verlegt, daß zwischen diesem und dem zugehörigen oberen Längsträger-Teil 2/1 bzw. 3/1 ein Ersatzrad 20 quer einbaubar ist. Dieses wird von wenigstens einer, außen an einem der Längsträger-Teile angeflanschten Konsole 21, 22 (siehe Fig. 4) getragen, die mit einem Schlitten zum Quereinschieben und -ausziehen sowie das Heben und Absenken bzw. Montieren und Demontieren des Ersatzrades 20 unterstützenden Mechanismen ausgestattet sein kann.

Wie aus Fig. 4 ebenfalls ersichtlich, sind an den beiden Teilen 2/1, 2/2 bzw. 3/1, 3/2 eines Rahmen-Längsträgers 2 bzw. 3 außen Winkelhalter 23 mit ihren Vertikal-Schenkeln 23/1 sehr günstig abgestützt angebracht, vorzugsweise angeschraubt, die als Träger für Fahrzeugteile 24 wie Kraftstoff- und/oder Druckluftbehälter, Staukästen, Batteriekästen und dergleichen dienen.

Zur Erhöhung der Biegesteifigkeit im aufgelösten Abschnitt können die beiden Teile 2/1, 2/2 bzw. 3/1, 3/2 der Rahmen-Längsträger 2, 3 auch noch durch wenigstens eine Strebe 25 miteinander verbunden sein, was beispielhaft in Fig. 5 dargestellt ist. In diesem Fall sind die beiden Längsträger-Teile 2/1, 2/2 bzw. 3/1, 3/2 zusammen mit den Streben 25 jeweils als einstückiges Blechpreßteil realisiert. Alternativ hierzu wäre jedoch eine Schweißkonstruktion aus einzeln vorgefertigten Teilen möglich.

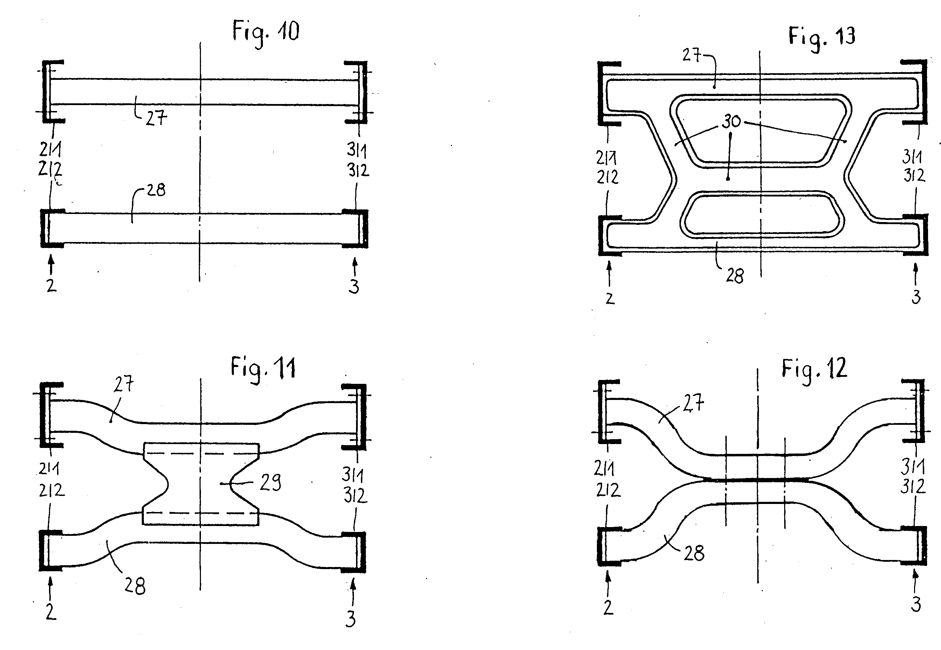

In den Fig. 8 und 9 sind von den vorher beschriebenen Ausführungsbeispielen insofern abweichende Varianten dargestellt, als sich das untere Teil 2/2, 3/2 jedes Rahmen-Längsträgers 2, 3 mit ebener Oberkante auf niedrigem Höhen-Niveau H4 in Verlängerung des vorderen, abgesenkten Längsträger-Abschnittes 2/3, 3/3 nach hinten bis vor die (erste, vordere) Hinterachse 12 erstreckt und unmittelbar oder nur mit geringem Abstand darüber auf höherem Niveau (Maß Fahrbahn bis Rahmen-Oberkante = H5) das obere Teil 2/1, 3/1 des Rahmen-Längsträgers 2, 3 verläuft. Auch bei diesen Versionen der Längsträger-Teile-Anordnung kann sich das jeweils obere Längsträger-Teil 2/1, 3/1 ebenso wie das untere Längsträger-Teil 2/2, 3/2 nur bis vor die (erste, vordere) Hinterachse 12 erstrecken und dort mit letzterem über eine Vertikaltraverse 14 verbunden sein (siehe Fig. 8). Das Fahrgestell-Heck 16 ist in diesem Fall gleich ausgebildet wie in den Ausführungsbeispielen gemäß Fig. 3, 5, 6 und 7. Das obere Längsträger-Teil 2/1, 3/1 endet jeweils im Bereich der Fahrerhaus-Rückwand 8 und läuft dort schräg nach vorne einen spitzen Winkel mit der Oberkante des zugehörigen unteren Längsträger-Teiles 2/2 bzw. 3/2 einschließend zu diesem hin und ist am zugehörigen unteren Längsträger-Teil 2/2, 3/2 über Schraub-, Niet-, oder Schweißverbindungen angeschlossen.

Alternativ zur Lösung gemäß Fig. 8 kann sich - wie aus Fig. 9 ersichtlich - das obere Teil 2/1, 3/1 jedes Rahmen-Längsträgers 2, 3 aber auch über die Hinterachsanordnung hinaus erstrecken und vor der (ersten, vorderen) Hinterachse 12 über einen Lagerschild 26, der zur Anlenkung von Hinterachsaufhängungsorganen dient, mit dem zugehörigen unteren Längsträger-Teil 2/2, 3/2 verbunden sein.

Unabhängig von ihrer jeweiligen Anordnung können die beiden Teile 2/1, 2/2 bzw. 3/1, 3/2 jedes Rahmen-Längsträgers 2, 3 entweder den gleichen Querschnitt oder unterschiedliche Querschnitte aufweisen, wobei das querschnittsstärkere wahlweise das untere oder obere sein kann.

Die beiden Längsträger 2, 3 sind generell über an geeigneten Stellen angebrachte Querträger miteinander verbunden. Die Fig. 10 bis 13 zeigen verschiedene Querträger-Konstruktionen für jenen Bereich auf, in dem die Längsträger 2, 3 in jeweils zwei Teile aufgelöst sind. Dabei können zur Verbindung der jeweils oberen Längsträger-Teile 2/1, 3/1 und unteren Längsträger-Teile 2/2, 3/2 gerade oder gekröpfte, gegebenenfalls endseitig mit Anschlußflanschen bestückte Querträger 27, 28 vorgesehen sein, die nicht (siehe Fig. 10) oder über ein Zwischenstück 29 (siehe Fig. 11) oder mittig aneinander anliegend direkt (siehe Fig. 12) miteinander verbunden sind und an denen die besagten Längsträger-Teile jeweils endseitig angeschraubt, angenietet oder angeschweißt sind. Bei der Ausführungsform gemäß Fig. 13 sind die Querträger 27, 28 zusammen mit diese verbindenden Verstrebungen 30 durch ein Blechpreßteil realisiert, an das die besagten Längsträger-Teile entweder angeschraubt, angenietet oder angeschweißt sind.

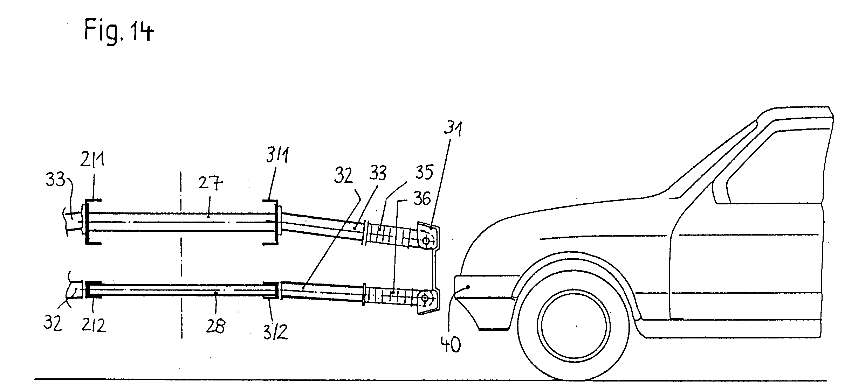

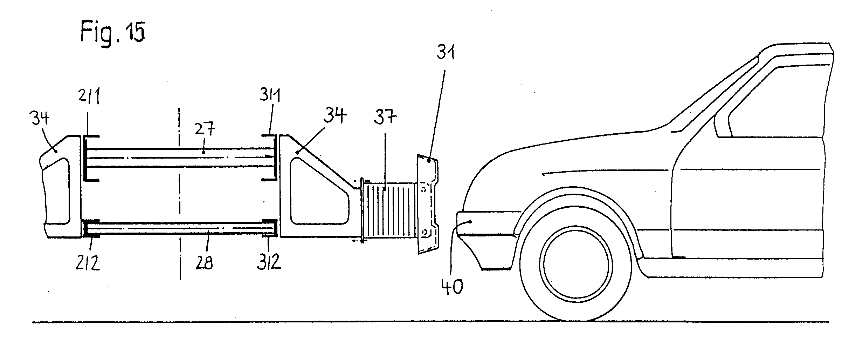

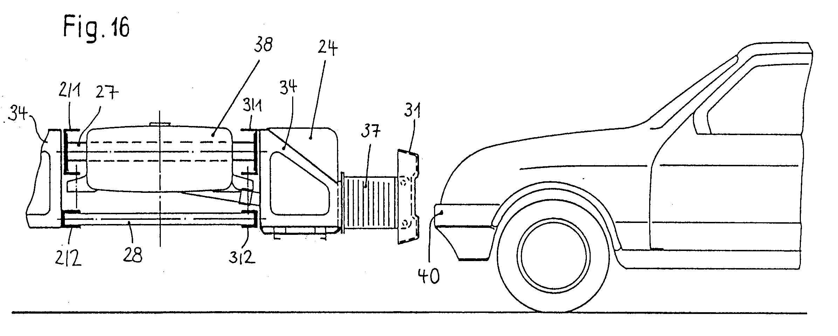

Die erfindungsgemäße Auflösung der beiden Rahmen-Längsträger 2, 3 eignet sich auch besonders gut für eine äußerst günstige Anordnung und Abstützung von dem seitlichen Unterfahrschutz dienenden Organen. Hierzu sind verschiedene Ausführungsbeispiele in den Fig. 14 bis 16 dargestellt. Dabei sind an beiden Teilen 2/1, 2/2 bzw. 3/1, 3/2 der beiden Rahmen-Längsträger 2, 3 seitliche Unterfahrschutzschilde 31 tragende Halter 32, 33 (Fig. 14) bzw. 34 (Fig. 15, 16) angebracht. In einer besonders sicheren Ausführungsform sind dabei die seitlichen Unterfahrschutzschilde 31 über quer nachgiebige Energieabsorber 35, 36 (Fig. 14) bzw. 37 (Fig. 15, 16) an den Haltern 32, 33 bzw. 34 abgestützt. Dadurch ist ein Seitenaufprall eines Pkw, wie in den Fig. 14 bis 16 dargestellt, besonders günstig, weil energieverzehrend, abfangbar. Durch eine entsprechende Ausgestaltung der Halter 32, 33, 34 mit einer seitlich auskragenden Länge, die größer als die ebenfalls seitlich an den Längsträger-Teilen befestigten Fahrzeugteile 24 wie Kraftstoff- und/oder Druckluftbehälter, Batteriekästen, Staukästen und dergleichen ist, sind letztere bei einem seitlichen Aufprall eines Personenkraftwagens auch relativ gut gegen etwaige Beschädigungen geschützt.

Im übrigen macht die Zweiteilung der beiden Längsträger 2, 3, wie ebenfalls aus Fig. 16 ersichtlich, eine besonders geschützte Unterbringung von zusätzlichen Fahrzeugteilen 38 wie Batteriekästen, Kraftstoff- und/oder Druckluftbehältern und dergleichen im Bereich zwischen beiden zweigeteilten Längsträgern 2, 3 möglich.

Unabhängig von der Gestaltung des Fahrgestells im hinteren Bereich kann jeder der Rahmen-Längsträger 2, 3 an seinem vorderen Endbereich eine Vertikal-Gabelung 39 aufweisen (siehe Fig. 1, 2, 3, 5, 6 und 8), an deren unterem Gabel-Teil 39/1 vorne über einen oder mehrere in Höhe H3 einer Pkw-Stoßstange 40 angeordnete(n) Energieabsorber 41 ein Stoßfänger 42 abgestützt ist. Das obere Gabel-Teil 39/2 dagegen endet in einer etwas über dem Normal-Niveau einer Pkw-Motorhaube 43 gegebenen Höhe H2 und ist untenseitig so gestaltet, daß ein Pkw bei einer Frontalkollision in diese so gegebene, im übrigen bauteilfreie oder bauteilarme und dann nur mit längsweich (in Längsrichtung nachgiebig) am Rahmen befestigten Bauteilen bzw. Aggregaten ausgestattete Lastkraftwagen-Knautschzone eindringen kann, wobei durch den/die in Rahmen-Längsrichtung nachgiebigen Energieabsorber 41 die Energieverzehrbar ist.

## Patentansprüche

1. Lastkraftwagen, insbesondere der Frontlenker-Bauart, zur Bildung eines Nutzfahrzeuges, mit einem Fahrgestell, dessen Rahmen aus zwei über Querträger verbundenen Längsträgern besteht, ein Fahrerhaus sowie unter oder vor letzterem ein Antriebsaggregat trägt und wenigstens eine Vorderachse und eine Hinterachse aufweist, dadurch gekennzeichnet, daß jeder der beiden Rahmen-Längsträger (2, 3) etwa ab der Fahrerhaus-Rückwand (8) in zwei Längsträger-Teile aufgelöst ist, nämlich ein unteres, nur bis vor die (erste, vordere) Hinterachse (12) reichendes Längsträger-Teil (2/2 bzw. 3/2) und ein darüber angeordnetes oberes Längsträger-Teil (2/1 bzw. 3/1), das mit dem unteren Längsträger-Teil (2/2 bzw. 3/2) über ein an dessen hinterem Ende angeordnetes Verbindungsorgan (13, 14, 26) verbunden ist, und daß jedes der beiden Teile (2/1, 2/2 bzw. 3/1, 3/2) eines Längsträgers (2, 3) den hinteren Fortsatz eines vorderen Längsträger-Abschnitts (2/3, 3/3) bildet, der im Bereich unterhalb des Fahrerhauses (5) und der Antriebseinrichtung (4) auf ein gegenüber dem Höhen-Niveau (H5) des oberen Längsträger-Teiles (2/1 bzw. 3/1) niedrigeres Höhen-Niveau (H4) von ca. 0,6 - 0,9 H5 abgesenkt ist.

2. Lastkraftwagen nach Anspruch 1, dadurch gekennzeichnet, daß jeder der beiden Rahmen-Längsträger (2, 3) am hinteren Ende des abgesenkten vorderen Längsträger-Abschnittes (2/3, 3/3) eine Vertikalgabelung (9) aufweist, an deren oberem Gabelteil (9/1) sich das obere Längsträger-Teil (2/1 bzw. 3/1) und an deren unterem Gabelteil (9/2) sich das untere Längsträger-Teil (2/2 bzw. 3/2) anschließt.

3. Lastkraftwagen nach Anspruch 2, dadurch gekennzeichnet, daß die beiden Teile (2/1, 2/2 bzw. 3/1, 3/2) jedes Rahmen-Längsträgers (2, 3) in einer Vertikalebene mit Abstand übereinander und in Längsrichtung im wesentlichen parallel verlaufend angeordnet sind.

4. Lastkraftwagen nach Anspruch 2, dadurch gekennzeichnet, daß jedes der beiden Teile (2/1, 2/2 bzw. 3/1, 3/2) eines Rahmen-Längsträgers (2, 3) mit dem zugehörigem Gabelteil (9/1, 9/2) über Schraub- oder Nietverbindungen verbunden ist.

5. Lastkraftwagen nach einem der Ansprüche 2 und 3, dadurch gekennzeichnet, daß jeder Rahmen-Längsträger (2, 3) einschließlich seiner beiden Teile (2/1, 2/2 bzw. 3/1, 3/2) durch eine aus mehreren vorgefertigten Einzelteilen zusammengesetzte Schweiß-Konstruktion realisiert ist.

6. Lastkraftwagen nach einem oder mehreren der vorhergehenden Ansprüche, dadurch gekennzeichnet, daß sich beide Teile (2/1, 2/2 bzw. 3/1, 3/2) jedes Rahmen-Längsträgers (2, 3) nach hinten nur bis vor die (erste, vordere) Hinterachse (12) erstrecken und dort über das Verbindungsorgan (14) miteinander verbunden sind, und daß der Rahmen (1) nach hinten durch sich am Verbindungsorgan (14) in Höhe der oberen Längsträger-Teile (2/1, 3/1) anschließende sowie durch wenigstens einen Querträger (15) verbundene Längsträger-Teile (2/4, 3/4) vervollständigt ist.

7. Lastkraftwagen nach einem oder mehreren der Ansprüche 1 bis 5, dadurch gekennzeichnet, daß das obere Teil (2/1, 3/1) jedes Rahmen-Längsträgers (2, 3) sich über die Hinterachsanordnung (12) hinaus erstreckt und mit dem unteren vor der (ersten, vorderen) Hinterachse (12) endenden Längsträger-Teil (2/2, 3/2) über einen endseitig Lagerschild (13), der auch zur Anlenkung von Hinterachsaufhängungsorganen dient, verbunden ist.

8. Lastkraftwagen nach einem oder mehreren der Ansprüche 1 bis 7, dadurch gekennzeichnet, daß die beiden Teile (2/1, 2/2 bzw. 3/1, 3/2) eines Rahmen-Längsträgers (2, 3) in ihrem Überdeckungsbereich auch noch durch wenigstens eine versteifende Strebe (25) miteinander verbunden sind.

9. Lastkraftwagen nach Anspruch 10, dadurch gekennzeichnet, daß die beiden Teile (2/1, 2/2 bzw. 3/1, 3/2) eines Rahmen-Längsträgers (2, 3) einschließlich der Strebe(n) (25) als einstückiges Blechpreßteil realisiert sind.

10. Lastkraftwagen nach Anspruch 1, dadurch gekennzeichnet, daß sich das untere Teil (2/2, 3/2) jedes Rahmen-Längsträgers (2, 3) mit ebener Oberkante auf gleich niedrigem Höhen-Niveau (H4) in Verlängerung des vorderen, abgesenkten Längsträger-Abschnittes (2/3, 3/3) nach hinten bis vor die (erste, vordere) Hinterachse (12) erstreckt und unmittelbar oder mit geringem Abstand darüber mit Oberkante auf höherem Niveau (H5) das obere Teil (2/1, 3/1) des Rahmen-Längsträgers (2, 3) verläuft.

11. Lastkraftwagen nach Anspruch 10, dadurch gekennzeichnet, daß beide Teile (2/1, 2/2 bzw. 3/1, 3/2) eines Rahmen-Längsträgers (2, 3) vor der (ersten, vorderen) Hinterachse (12) enden, dort über das Verbindungsorgan (14) und weiter vorn über Schraub-, Niet-, oder Schweißverbindungen miteinander verbunden sind, und daß der Rahmen nach hinten durch sich am Verbindungsorgan (14) in Höhe der oberen Längsträger-Teile (2/1, 3/1) anschließende, durch wenigstens einen Querträger (15) verbundene Längsträger-Teile (2/4, 3/4) vervollständigt ist.

12. Lastkraftwagen nach Anspruch 10, dadurch gekennzeichnet, daß sich das obere Teil (2/1, 3/1) jedes Rahmen-Längsträgers (2, 3) über die Hinterachsanordnung hinaus erstreckt und vor der (ersten, vorderen) Hinterachse (12) über einen Lagerschild (26), der auch zur Anlenkung von Hinterachsaufhängungsorganen dient, sowie weiter vorn über Schraub-, Niet- oder Schweiß-Verbindungen mit dem unteren Längsträger-Teil (2/2, 3/2) verbunden ist.

13. Lastkraftwagen nach einem der Ansprüche 1, 6, 7 und 11, dadurch gekennzeichnet, daß das Verbindungsorgan (14) durch eine Vertikaltraverse gebildet ist, an der mit dem hinteren Rahmenende (2/4, 3/4, 15) verbundene Lagerschilde (17, 18) für Hinterachsaufhängungsorgane, wie Lenker, Stabilisatoren und dergleichen angeschlossen sind.

14. Lastkraftwagen nach einem oder mehreren der vorhergehenden Ansprüche, dadurch gekennzeichnet, daß die beiden Teile (2/1, 2/2 bzw. 3/1, 3/2) jedes Rahmen-Längsträgers (2, 3) entweder den gleichen Querschnitt oder unterschiedliche Querschnitte aufweisen und in letzterem Fall das querschnittsstärkere Teil wahlweise das untere oder obere sein kann.

15. Lastkraftwagen nach einem oder mehreren der vorhergehenden Ansprüche, dadurch gekennzeichnet, daß die jeweils oberen Teile (2/1, 3/1) und die jeweils unteren Teile (2/2, 3/2) der beiden Rahmen-Längsträger (2, 3) jeweils über wenigstens einen, vorzugsweise jedoch mehrere Querträger (27, 28) miteinander verbunden sind.

16. Lastkraftwagen nach Anspruch 15, dadurch gekennzeichnet, daß zwei jeweils übereinander angeordnete Querträger (27, 28) mittig direkt oder über ein Zwischenstück (29) miteinander verbunden sind.

17. Lastkraftwagen nach Anspruch 15, dadurch gekennzeichnet, daß zwei jeweils übereinander angeordnete Querträger (27, 28) zusammen mit diese verbindenden Verstrebungen (30) durch ein Blechpreßteil realisiert sind.

## Claims

1. A heavy goods vehicle, in particular of the forward control type of construction, for the formation of a commercial vehicle, with a chassis whose frame consists of two longitudinal beams connected by means of cross-beams, supports a cab and a drive unit under or in front of the same and has at least one front axle and one rear axle, characterised in that each of the two longitudinal frame beams (2, 3) is divided, approximately from the rear wall of the cab (8), into two longitudinal beam portions, namely a lower longitudinal beam portion (2/2 and 3/2 respectively) extending only to forward of the (first, forward) rear axle (12) and an upper longitudinal beam portion (2/1 and 3/1 respectively) positioned above and connected to the lower longitudinal beam portion (2/2 and 3/2 respectively) by means of a connecting member (13, 14, 26) positioned at the rear end thereof, and in that each of the two portions (2/1, 2/2 and 3/1, 3/2 respectively) of a longitudinal beam (2, 3) forms the rearward extension of a forward longitudinal beam portion (2/3, 3/3) which, in the region below the cab (5) and the drive unit (4), is lowered to a height level (H4) which is lower than the height level (H5) of the upper longitudinal beam portion (2/1 and 3/1 respectively), being approx 0.6 - 0.9 of H5.

2. A heavy goods vehicle as claimed in claim 1, characterised in that each of the two longitudinal frame beams (2, 3) has, at the rear end of the lowered front longitudinal beam portion (2/3, 3/3), a vertical bifurcation (9) whose upper fork portion (9/1) is adjoined by the upper longitudinal beam portion (2/1 and 3/1 respectively) and whose lower fork portion (9/2) is adjoined by the lower longitudinal beam portion (2/2 and 3/2 respectively).

3. A heavy goods vehicle as claimed in claim 2, characterised in that the two portions (2/1, 2/2 and 3/1, 3/2 respectively) of each longitudinal frame beam (2, 3) are positioned in a vertical plane at a distance above each other and in a longitudinal direction substantially parallel to each other.

4. A heavy goods vehicle as claimed in claim 2, characterised in that each of the two portions (2/1, 2/2 and 3/1, 3/2 respectively) of a longitudinal frame beam (2, 3) is connected to the associated fork portion (9/1, 9/2) by means of screw or rivet connections.

5. A heavy goods vehicle as claimed in one of claims 2 and 3, characterised in that each longitudinal frame beam (2, 3), including both its portions (2/1, 2/2 and 3/1, 3/2 respectively), is made from a welded structure comprising a plurality of prefabricated component parts.

6. A heavy goods vehicle as claimed in one or more of the preceding claims, characterised in that both portions (2/1, 2/2 and 3/1, 3/2 respectively) of each longitudinal frame beam (2, 3) extend rearwards only to forward of the (first, forward) rear axle (12) and are there connected to each other by means of the connecting member (14), and in that the frame (1) is completed towards the rear by longitudinal beam portions (2/4, 3/4) adjoining the connecting member (14) at the height of the upper longitudinal beam portions (2/1, 3/1) and connected by at least one cross-beam (15).

7. A heavy goods vehicle as claimed in one or more of claims 1 to 5, characterised in that the upper portion (2/1, 3/1) of each longitudinal frame beam (2, 3) extends beyond the rear axle assembly (12) and is connected to the lower longitudinal beam portion (2/2, 3/2) ending forward of the (first, forward) rear axle (12) by means of an end-face bearing plate (13) which is also used for the coupling of rear axle suspension members.

8. A heavy goods vehicle as claimed in one or more of claims 1 to 7, characterised in that the two portions (2/1, 2/2 and 3/1, 3/2 respectively) of a longitudinal frame beam (2, 3) are connected to each other in their area of overlap also by at least one reinforcing stanchion (25).

9. A heavy goods vehicle as claimed in claim 10, characterised in that the two portions (2/1, 2/2 and 3/1, 3/2 respectively) of a longitudinal frame beam (2, 3), including the stanchion(s) (25), are made as a one-piece pressed sheet steel part.

10. A heavy goods vehicle as claimed in claim 1, characterised in that the lower portion (2/2, 3/2) of each longitudinal frame beam (2, 3) extends with a flat upper edge at the same low height level (H4) in extension of the forward, lowered longitudinal beam portion (2/3, 3/3) rearwards to forward of the (first, forward) rear axle (12) and the upper portion (2/1, 3/1) of the longitudinal frame (2, 3) runs immediately or at a slight distance above it with its upper edge at a higher level (H5).

11. A heavy goods vehicle as claimed in claim 10, characterised in that both portions (2/1, 2/2 and 3/1, 3/2 respectively) of a longitudinal frame beam (2, 3) end forward of the (first, forward) rear axle (12), are connected to each other there by means of the connecting member (14) and, further forwards, by means of screw or rivet connections or welded joints, and in that the frame is completed towards the rear by longitudinal beam portions (2/4, 3/4) which adjoin the connecting member (14) at the height of the upper longitudinal beam portions (2/1, 3/1) and are connected by means of at least one cross-beam (15).

12. A heavy goods vehicle as claimed in claim 10, characterised in that the upper portion (2/1, 3/1) of each longitudinal frame beam (2, 3) extends beyond the rear axle assembly and is connected to the lower longitudinal beam portion (2/2, 3/2) forward of the (first, forward) rear axle (12) by means of a bearing plate (26), which is also used for the coupling of rear axle suspension members, and, further forwards, by means of screw or rivet connections or welded joints.

13. A heavy goods vehicle as claimed in one of claims 1, 6, 7 and 11, characterised in that the connecting member (14) is formed by a vertical cross-arm adjoined by bearing plates (17, 18) which are connected to the rear frame end (2/4, 3/4, 15) and are for rear axle suspension members such as pull rods, stabilisers and the like.

14. A heavy goods vehicle as claimed in one or more of the preceding claims, characterised in that the two portions (2/1, 2/2 and 3/1, 3/2 respectively) of each longitudinal frame beam (2, 3) have either the same cross-section or different cross-sections and, in the latter case, the portion with the larger cross-section may optionally be the upper or lower one.

15. A heavy goods vehicle as claimed in one or more of the preceding claims, characterised in that the respective upper portions (2/1, 3/1) and the respective lower portions (2/2, 3/2) of the two longitudinal frame beams (2, 3) are each connected to each other by means of at least one but preferably a plurality of cross-beams (27, 28).

16. A heavy goods vehicle as claimed in claim 15, characterised in that two cross-beams (27, 28) positioned respectively above each other are connected to each other centrally either directly or by means of an intermediate member (29).

17. A heavy goods vehicle as claimed in claim 15, characterised in that two cross-beams (27, 28) positioned respectively above each other, together with cross-members connecting them, are made from one pressed sheet steel part.

## Revendications

1. Camion notamment à cabine avancée pour constituer un véhicule utilitaire comprenant un châssis dont le cadre se compose de longerons reliés par des traverses, une cabine de conducteur ainsi qu'en dessous de celui-ci ou derrière celui-ci, un groupe d'entraînement et au moins un essieu avant et un essieu arrière,
caractérisé en ce que
chacun des deux longerons (2, 3) est décomposé sensiblement à partir de la paroi arrière (8) de la cabine du conducteur en deux parties de longeron, à savoir une partie inférieure qui n'arrive que jusque devant le premier essieu arrière (12) constituant la partie de longeron (2/2 ou 3/2) et par-dessus cette partie inférieure, une partie supérieure de longeron (2/1, 3/1) qui est reliée à la partie inférieure de longeron (2/2, 3/2) par un organe de liaison (13, 14, 26) prévu à l'extrémité arrière de la partie inférieure de longeron et en ce que chacune des deux parties (2/1, 2/2 ou 3/1, 3/2) d'un longeron (2, 3) forme le prolongement arrière d'un segment avant de longeron (2/3, 3/3) qui est abaissé dans la zone en dessous de la cabine de conducteur (5) et de l'installation d'entraînement (4) à un niveau (H4) inférieur au niveau (H5) de la partie supérieure de longeron (2/1 ou 3/1) d'une différence correspondant à environ 0,6-0,9 H5.

2. Camion selon la revendication 1,
caractérisé en ce que
chacun des deux longerons (2, 3) comporte à l'extrémité arrière du segment avant abaissé de longeron (2/3, 3/3), une fourche verticale (9) dont la partie de fourche supérieure (9/1) comprend la partie supérieure de longeron (2/1, 3/1) et à la partie inférieure de fourche (9/2) se raccorde la partie inférieure de longeron (2/2, 3/2).

3. Camion selon la revendication 2,
caractérisé en ce que
les deux parties (2/1, 2/2 ou 3/1, 3/2) de chaque longeron de châssis (2, 3) sont superposées dans un plan vertical à une distance et à une longueur et sont disposées essentiellement en parallèle.

4. Camion selon la revendication 2,
caractérisé en ce que
chacune des deux parties (2/1, 2/2 ou 3/1, 3/2) d'un longeron de châssis (2, 3) est reliée à la partie de fourche (9/1, 9/2) correspondante par une liaison à vis ou à rivets.

5. Camion selon l'une des revendications 2 et 3,
caractérisé en ce que
chaque longeron de châssis (2, 3) y compris ses deux parties (2/1, 2/2 ou 3/1, 3/2) est réalisé par une construction soudée composée de plusieurs pièces séparées, préfabriquées.

6. Camion selon l'une ou plusieurs des revendications précédentes,
caractérisé en ce que
les deux parties (2/1, 2/2, 3/1, 3/2) de chaque longeron de châssis (2, 3) s'étendent vers l'arrière jusque devant le premier essieu arrière (12) et sont reliées entre elles à cet endroit par un organe de liaison (14) et en ce que le châssis (1) présente à l'arrière du fait de l'organe de liaison (14), il est complété à la hauteur de la partie supérieure de longeron (2/1, 3/1), des parties de longeron (2/4, 3/4) reliées par au moins une traverse (15).

7. Camion selon une ou plusieurs des revendications 1 à 5,
caractérisé en ce que
la partie supérieure (2/1, 3/1) de chaque longeron (2, 3) s'étend au-delà de la position de l'essieu arrière (12) et est reliée à la partie de longeron (2/2, 3/2), inférieure se terminant avant le premier essieu arrière (12), par un panneau de palier d'extrémité (13) relié pour l'articulation des organes de suspension de roues arrière.

8. Camion selon une ou plusieurs des revendications 1 à 7,
caractérisé en ce que
les deux parties (2/1, 2/2 ou 3/1, 3/2) d'un longeron (2, 3) sont également reliées par au moins une entretoise de rigidification (25) dans leurs zones de chevauchement.

9. Camion selon la revendication 8,
caractérisé en ce que
les deux parties (2/1, 2/2, 3/1, 3/2) d'un longeron (2, 3) y compris la ou les entretoises (25) sont réalisées en une seule pièce en tôle matricée.

10. Camion selon la revendication 1,
caractérisé en ce que
la partie inférieure (2/2, 3/2) de chaque longeron (2, 3) s'étend avec l'arête supérieure au même niveau bas (H4) dans le prolongement du segment longitudinal abaissé (2/3, 3/3) vers l'arrière jusque devant le premier essieu arrière (12) et est reliée directement ou avec une faible distance au-dessus, à l'arête au niveau plus élevé (H5) de la partie supérieure (2/1, 3/1) du longeron de châssis (2, 3).

11. Camion selon la revendication 10,
caractérisé en ce que
les deux parties (2/1, 2/2 ou 3/1, 3/2) d'un longeron de châssis (2, 3) se terminent avant un premier essieu arrière (12) pour y être reliées par l'organe de liaison (14) ainsi qu'en outre par les liaisons à vis ou à rivets ou les liaisons collées, en ce que le cadre est complété vers l'arrière par un écran comprenant au moins une traverse (15) reliant des poutres de support longitudinales (2/4, 3/4) à la hauteur de la partie supérieure de longeron (2/1, 3/1).

12. Camion selon la revendication 10,
caractérisé en ce que
la partie supérieure (2/1, 3/1) de chaque longeron de châssis (2, 3) s'étend au-delà de l'essieu arrière et en avant du premier essieu arrière (12) cette partie sert d'organe de réception de secours de l'articulation par l'intermédiaire d'un panneau de palier (26) en étant reliée comme indiqué précédemment par des liaisons à vis, à rivets ou à soudure à la partie inférieure de longeron (2/2, 3/2).

13. Camion selon l'une des revendications 1, 6, 7 et 11,
caractérisé en ce que
l'organe de liaison (14) est formé par une traverse verticale à laquelle sont reliés le panneau de palier (17, 18) relié à l'extrémité arrière de châssis (2/3, 3/4, 15) pour les organes de suspension de l'essieu arrière ainsi que des guides, des stabilisateurs ou des moyens analogues.

14. Camion selon une ou plusieurs des revendications précédentes,
caractérisé en ce que
les deux parties (2/1, 2/2, 3/1, 3/2) de chaque longeron de châssis (2, 3) ont, soit la même section, soit une section différente et dans ce dernier cas, la partie de section la plus forte est au choix la partie inférieure ou la partie supérieure.

15. Camion selon une ou plusieurs des revendications précédentes,
caractérisé en ce que
les parties chaque fois supérieures (2/1, 3/1) et les parties chaque fois inférieures (2/2, 3/2) des deux longerons (2, 3) sont reliées par au moins une et de préférence toutefois plusieurs traverses (27, 28).

16. Camion selon la revendication 15,
caractérisé en ce que
deux traverses (27, 28) chaque fois superposées sont reliées en leur milieu, directement par une pièce intermédiaire (29).

17. Camion selon la revendication 15,
caractérisé en ce que
chaque fois deux traverses (27, 28) superposées et les entretoises (30) qui les relient sont réalisées sous la forme de pièces en tôle matricée.
